# EUROPEAN PATENT APPLICATION

(11) **EP 2 757 458 A2**
(43) Date of publication of application: **23.07.2014**
(21) Application number: 14150849.9
(22) Date of filing: 10.01.2014
(51) Int. Cl.: G06F 3/0488, G06F 3/0483

(54) **Method and electronic device for displaying application**

(30) Priority: 17.01.2013 US 201313744215; 04.07.2013 KR 20130078549
(71) Applicant: Samsung Electronics Co., Ltd, Gyeonggi-do 443-742 (KR)
(72) Inventor: Clausen, William Stryker, Suwon-si, 443-742 Gyeonggi-do (KR); Kim, Ki-Tae Landon, Suwon-si, 443-742 Gyeonggi-do (KR)
(74) Representative: Nederlandsch Octrooibureau

(57) **Abstract**

A method and electronic device for displaying multiple applications concurrently running is provided. A predetermined location within the screen of an active first application is selected and dragged. At least a part of a screen of an active second application not having thus far been displayed, displayed in an area in which a screen of an active first application has been displayed by replacing the screen of the first application with the screen of the second application to an extent that the screen of the first application is dragged.

## Description

### TECHNICAL FIELD

The present disclosure relates to a method and device for managing applications. More particularly, the present disclosure relates to a method and electronic device for displaying a plurality of applications concurrently running in a desktop environment of a computer or comparable device.

### BACKGROUND

Mobile terminals are developed to provide wireless communication between users. As technology has advanced, mobile terminals now provide many additional features beyond simple telephone conversation. For example, mobile terminals are now able to provide additional functions such as an alarm, a Short Messaging Service (SMS), a Multimedia Message Service (MMS), E-mail, games, remote control of short range communication, an image capturing function using a mounted digital camera, a multimedia function for providing audio and video content, a scheduling function, and many more. With the plurality of features now provided, a mobile terminal has effectively become a necessity of daily life.

One feature that has become more common recently in electronic devices such as mobile terminals as well as in computers is a touch screen interface. For example, most smart phones and tablet computers now are provided with a touch screen interface. The touch screen functions as the display screen and also may function as an input device. For example, a user may select, open, grab and drag, adjust, etc. various applications and content via a touch to the corresponding icon or control displayed on the touch screen. The touch screen may be configured in various ways such as capacitive touch, stylus, etc.

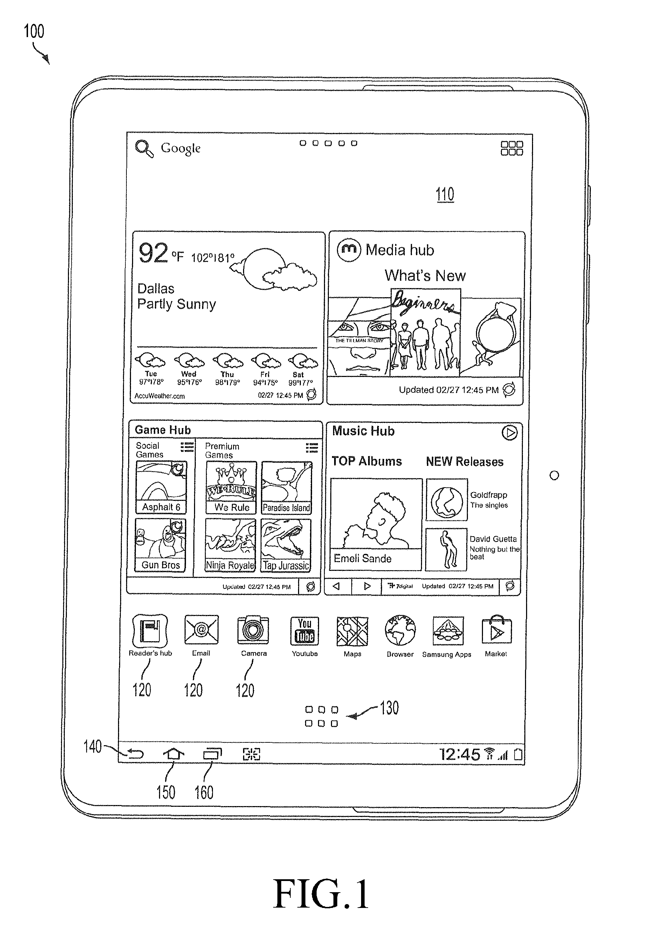

FIG. 1 illustrates a typical mobile device as an example of the electronic device.

Referring to FIG. 1, a tablet computer 100 is shown as an example of the mobile device. The tablet computer 100 includes a touch screen display with a touch screen input function. The touch screen display of the tablet computer 100 will typically have a main screen including a desktop 110, Typically, the desktop refers to a wallpaper of windows, icons, dialog boxes, etc., configured for a computer graphic user to work on the computer screen. The desktop may include icons 120 for various applications the user may wish to be able to launch quickly. The desktop 110 may also include a start menu 130 or similar function for the user to access applications and functions that do not have desktop icons provided.

Some Operating Systems (OSs) now allow a user to open and run multiple applications concurrently, even on a device where processing power and memory may be constrained, such as a smart phone. Other OSs may actively run only one application at a time, but may continue to run background processes for other applications.

An OS will usually be able to show the user a selection of recently used applications. However, it can be difficult for a user to switch between applications easily. For example, a user may be using an email application and select a link within an email to switch to a web browser and open the link. If the user wishes to refer back to the most recently used application, in this example switching back from the web browser to email, he may use a "back" button 140 to return to the previous application. However, many OSs have no corresponding "forward" button to resume the next application, in this example the web browser. Thus, if a user has finished with email and wishes to re-view the web page, he may return to the letter that had the link and re-select it, or may select a home button 150 to return to a home screen, or may select a task manager screen 160 to return to a task manager screen and select the web browser. An option to move directly forward to the next application is not available. The back button 140 may further be limited in that a back operation is separately defined for an application if the application was not invoked from another application. Thus, if the user opens the web browser separately and selects the back button 140, he may return to a previously opened web site instead of the most recent previously used application, in this example email.

Similarly, if multiple applications are open or have been opened recently, the user may be forced to leave the screen of the current application to use an OS function such as the task manager listing all the open applications. The user may then select an opened application to bring it to the forefront so that he may see the contents. The user may need to refer back and forth, for example, between an email application, an address book, a web browser, a mobile banking application, etc., to determine or verify various information. There has not previously been available an easy and intuitive way to switch directly between the applications.

Accordingly, a need exists for a technology for providing an improved user interface for managing a plurality of applications. In particular, an improved and intuitive interface is needed for a touchscreen environment of a mobile device.

The above information is presented as background information only to assist with an understanding of the present disclosure. No determination has been made, and no assertion is made, as to whether any of the above might be applicable as prior art with regard to the present disclosure.

### SUMMARY

Embodiments of the present disclosure provide a method and electronic device for displaying applications so that a plurality of applications running concurrently may be managed in an improved way.

Embodiments of the present disclosure provide a method and electronic device for displaying applications so that a plurality of applications running concurrently may be intuitively identified and selected.

Embodiments of the present disclosure provide a method and electronic device for displaying applications so that predetermined functions with respect to a plurality of applications running concurrently may be intuitively performed.

In accordance with an aspect of the present disclosure, a method for displaying multiple applications is provided. The method includes displaying at least a part of a screen of an active second application not having thus far been displayed, in an area in which a screen of an active first application has been displayed by replacing the screen of the first application with the screen of the second application to an extent that the screen of the first application is dragged, when a predetermined location within the screen of the first application is selected and dragged.

In accordance with another aspect of the present disclosure, an electronic device for displaying multiple applications is provided. The electronic device includes a display configured to display a screen of at least one active application; an input unit configured to receive an input from a user; and a controller configured to display at least a part of a screen of an active second application not having thus far been displayed, in an area in which a screen of an active first application has been displayed by replacing the screen of the first application with the screen of the second application to an extent that the screen of the first application is dragged, when a predetermined location within the screen of the first application being displayed on the display is selected and dragged through the input unit.

Other aspects, advantages, and salient features of the disclosure will become apparent to those skilled in the art from the following detailed description, which, taken in conjunction with the annexed drawings, discloses exemplary embodiments of the disclosure.

### BRIEF DESCRIPTION OF THE DRAWINGS

The above and other features and advantages of the present disclosure will become more apparent by describing in detail exemplary embodiments thereof with reference to the attached drawings in which:
FIG. 1 illustrates a mobile device according to the related art;
FIGS. 2A-2C illustrate application summary screens of a mobile device according to the related art;
FIGS. 3A-3C illustrate application displays, according to an embodiment of the present disclosure;
FIGS. 4A-4D illustrate application displays, according to another embodiment of the present disclosure;
FIG. 5 illustrates an application display, according to another embodiment of the present disclosure;
FIG. 6 illustrates an application display, according to another embodiment of the present disclosure;
FIGS. 7A-7C illustrate application displays, according to another embodiment of the present disclosure;
FIG. 8 is a block diagram of a mobile device for displaying applications, according to an embodiment of the present disclosure; and
FIG. 9 is flowchart illustrating application display operations according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions are omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

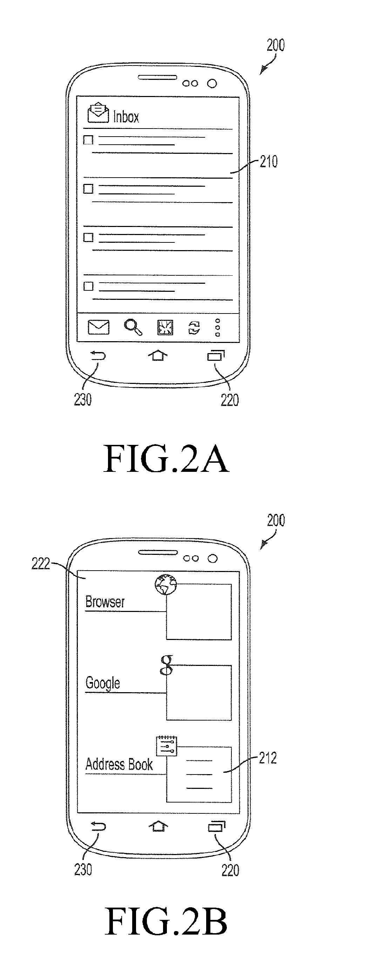

FIGS. 2A-2C illustrate application summary screens of a mobile device according to the related art.

Referring to FIG. 2A, an application, for example, an email application 210, is open on a mobile device 200 such as a smart phone. The Operating System (OS) of the mobile device 200 is capable of running multiple applications concurrently, but displays only one application "in focus" filling the screen at any time. This restriction is primarily due to the very limited screen size of mobile devices such as smart phones. It is assumed for this example that there are multiple applications running concurrently, but only one application 210 is open on the screen for the user to interact with.

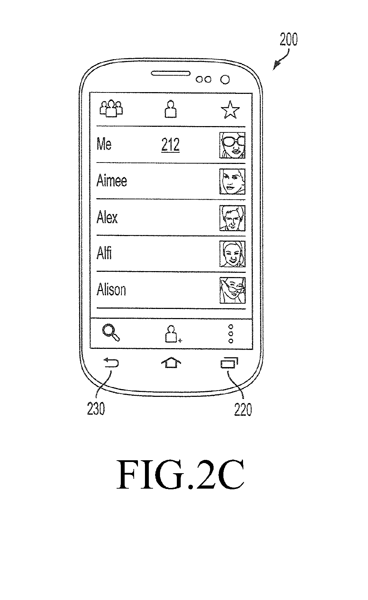

By selecting an application list function 220 of the mobile device 200, an application management screen 222 is brought up as shown in FIG. 2B. In this example, the application management screen 222 is shown with three applications running concurrently. There may be more concurrently running applications not shown. In some OSs, only a visual image of a most recent state of recently used applications is shown in the application management screen 222. In the application management screen 222, a user may, for example, close an application by sliding it off screen. The user may scroll through the list of running applications by sliding the list, for example, along the long axis of the mobile device 200. The user may select an application, for example, address book 212, by tapping it. Selecting an application, for example, the address book 212, then brings the selected address book 212 to the forefront, as shown in FIG. 2C, and exits the application management screen 222.

Alternatively, the user could select back button 230 to return to the application 210 which was previously in the forefront. If the user selects the back button 230 while in an application for which the back button 230 has no currently defined operation, the user will return to a home screen desktop.

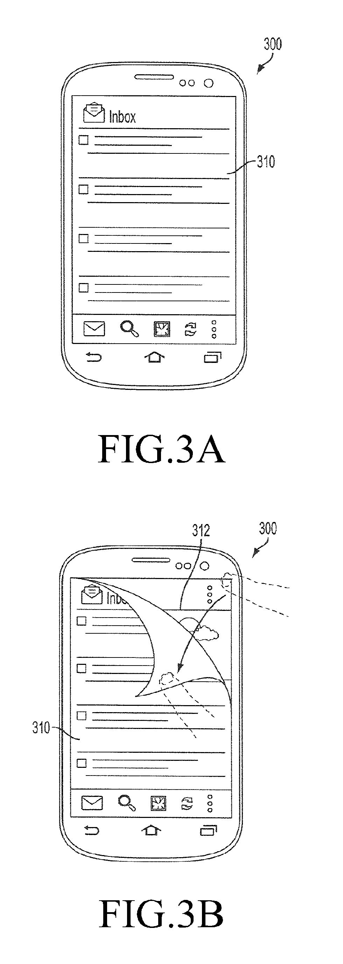

FIGS. 3A-3C illustrate application displays, according to an embodiment of the present disclosure.

Referring to FIG. 3A, a mobile device 300 is shown with an application 310 open and in the forefront. It is assumed for this example that multiple applications including, e.g., an application 312 shown in FIG. 3B, are running concurrently in the background, and thus not visible in FIG. 3A.

Referring to FIG. 3B, the user selects a predetermined location (or area) of a screen of the application 310. The predetermined location may be determined in an area that has no defined operation within the application. For example, a corner of the application screen, where no button, menu, etc., is present for selection within the application, may be determined as the predetermined location for user selection. However, the present disclosure is not limited thereto. For example, a defined operation of a location of the application screen may be defined only for certain events, such as a single tap event on a button which is located, for example, in an upper right corner. The single tap on the button would thus have a predefined operation or function within the application, and no further evaluation of the event is necessary. In this example a different event, such as a touch and drag event, is not defined within the application for the button location. That is, if the button location is touched and dragged, the application will not have a corresponding operation or function. In that case, the application may not interpret the undefined event. The OS may then interpret the event that was undefined in the application, in this example, the touch-and-drag event on the button. A tap on the button thus is first determined to be a defined application function, but a touch drag on the button is not determined to be defined in the application, and therefore it is determined whether the OS has defined the event.

If there is a conflict between an event defined in the OS and the same event defined in an application, the definition within the application will be correct; otherwise, the definition within the OS would effectively disable the valid application input. For example, if a game application in which objects may be selected and moved has an object in the upper right corner, a touch and drag event at the object should be interpreted as the input to the application.

The user then drags the selected location to peel the screen of the application 310 across the desktop surface, making the screen of the application 310 displayed as if it is peeling off from the selected location, as shown in FIG. 3B. The peeled area of the screen of the application 310 according to the dragging reveals beneath it the screen of other application 312. The other application 312 may be the most recently used application that has been active but not displayed. The screen of the application 312 replaces the area when the screen of the application 310 is peeled off and not shown any more. The peeled area of the screen of the application 310 and the replaced area of the screen of the application 312 may be determined according to the extent to which the screen of the application 310 has been dragged.

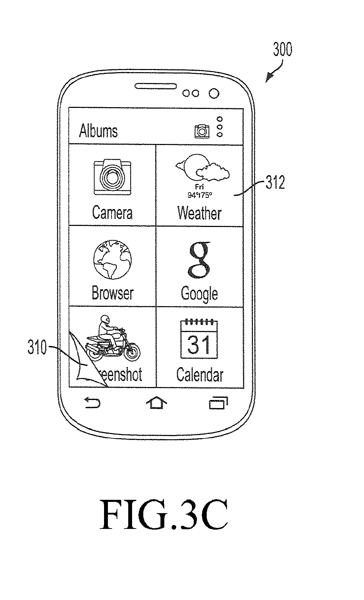

The peeling operation according to the dragging may be repeated to reveal screens of additional applications. Each application revealed in this manner is in a currently running state. Embodiments may be configured such that the dragged screen of the application 310 remains in a peeled state until returned, as shown in FIG. 3C.

Alternatively, embodiments may be configured such that an application screen may be completely peeled off by the user. Alternatively, embodiments may be configured such that the application 310 returns automatically to the forefront, that is, unpeels, if dragging of the peeled screen of the application 310 is released. In this example, if dragging of the peeled screen of the application 310 is released, it would return to the state of FIG. 3A. Alternatively, embodiments may be configured such that if dragging of the peeled screen of the application 310 is released, then the peeled application 310 peels off completely if peeled more than a predetermined threshold and returns to the forefront if peeled less than the threshold. Thus, the user may consult concurrently running applications without going through an application management screen.

The peeled application screen may remain at least partially visible in the peeled state. A level of transparency of the screen of the peeled application may be predetermined. For example, the transparency level may be determined according to other factors, such as the extent to which the application has been peeled, a number of applications in a peeled state, a duration of the peeled state, a direction or position of the peeling, etc. For example, a user may peel the screen of an application from an upper right corner, and a degree of transparency of the screen of the peeled application may depend on the direction. Specifically, a degree of transparency of the peeled application screen may depend on the direction, such that peeling along the top edge is completely transparent, peeling down along the right edge is completely opaque, peeling diagonally towards the opposite corner renders the peeled application semitransparent, etc.

The user may thus interact directly with the revealed application beneath the peeled application screen, and then unpeel the peeled application screen to return it to the forefront. However, the present disclosure is not limited thereto. For example, embodiments may be configured to allow an application screen to be completely peeled.

The peeled application screen may indicate on its rear surface either an inversion of the front surface or another indication of what the peeled application is, so that the user may easily distinguish multiple peeled applications from each other. For example, an application screen that has been peeled a maximum amount to an opposite location on the screen should preferably be recognizable by the user in the peeled state. If the user has peeled multiple applications, he may thus easily unpeel to return to any peeled application he chooses.

In an embodiment of the present disclosure, any number of concurrently running or recently opened applications may be peeled in the above manner. If the user peels the screen of the application 310 to reveal the screen of the application 312 and sees that application 312 is not the application he was seeking, he may then peel the screen of the application 312 to reveal another application beneath it, and so on.

In an embodiment of the present disclosure, a mobile device may link applications concurrently running, i.e., in an active state and store them as a linked list. An application in the active state may refer to an application running in the foreground or background. If the user peels an application screen completely off the screen, the application is moved to the "bottom" of the applications layered in the linked list, i.e., the application is moved way down to the end of the linked list. However, the present disclosure is not limited thereto. For example, an application peeled completely off the screen may be closed. Further, the above features may be combined. For example, peeling in different directions may be configured to perform different functions; an application peeled completely off the screen from right to left, for example, may be returned to the end of the linked list, and an application peeled completely off the screen in another direction, for example, left to right, may be closed thereby.

Embodiments may be configured such that peeling from different locations, for example, the top and bottom of the application, will cycle through the linked list of applications in corresponding opposite directions. Peeling in opposite directions to cycle through the applications in different directions results in an effect similar to a rolodex or carousel. If an embodiment is configured in this manner, it is preferred that the peeled and peelable applications be visible at least temporarily on opposite edges of the display.

The above features may be combined together. For example, a first application might be peeled but not completely removed. A series of revealed second applications may then be completely removed, until a desired application is revealed. The user may interact normally with the desired application, and then unpeel the original application to return it to the forefront.

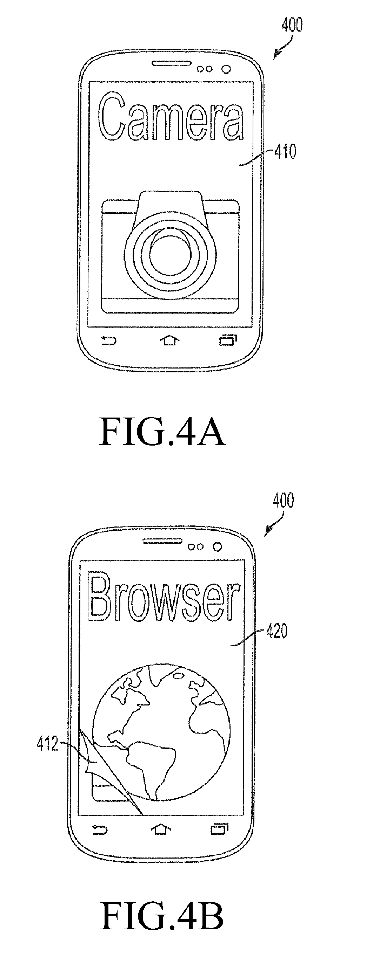

FIGS. 4A-4D illustrate application displays, according to another embodiment of the present disclosure.

Referring to FIG. 4A, a mobile device 400 is shown running multiple applications. In FIG. 4A, an application 410 is active in the forefront.

In FIG. 4B, the screen of the application 410 has been peeled and the screen of an application 412 is now peeled. Peeled screen of the application 412 may be interacted with the user normally to the extent that it is visible, and may be unpeeled to fully return it to the forefront. The screen of an application 420 is revealed by the peeling and may be interacted with the user normally to the extent that it is visible.

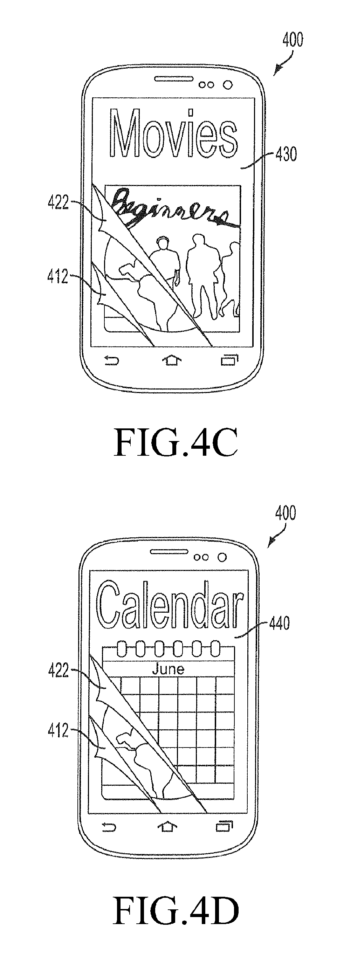

In FIG. 4C, the screen of the application 420 has also been peeled, and the screen of an application 422 is now peeled. An application 430 is revealed by the peeling and may be interacted with the user normally to the extent that it is visible. Peeled application 422 may be interacted with the user normally to the extent that it is visible, and may be unpeeled to fully return it to the forefront. In an embodiment of the present disclosure, peeled application 412 remains visible and may be unpeeled even with peeled application 422 after it. Any number of peeled applications may thus remain on screen in a peeled state. However, the present disclosure is not limited thereto. For example, the number of peeled applications visible may be limited, such that if the limit is exceeded, a longest-peeled application may be peeled off the screen completely and returned to end of the list of active applications.

In FIG. 4D, a user has determined that an application 430 was not desired, and so the screen of the application 430 has been peeled completely off the screen, revealing an application 440 which may be fully interacted with to the extent that it is visible. Peeled applications 412 and 422 remain visible and may be interacted with normally to the extent either is visible. Either of applications 412 and 422 may be unpeeled to return it to the forefront.

Embodiments may be configured such that any predetermined location of the application may be selected to begin peeling. The predetermined location may be near an edge of the application screen but the present invention is not limited thereto. For example, embodiments may be configured such that the user may select a side, a corner, a center, etc. Also, embodiments may be configured such that, if all the applications are peeled off the desktop, the application 410 shown in FIG. 4A may be revealed on the screen.

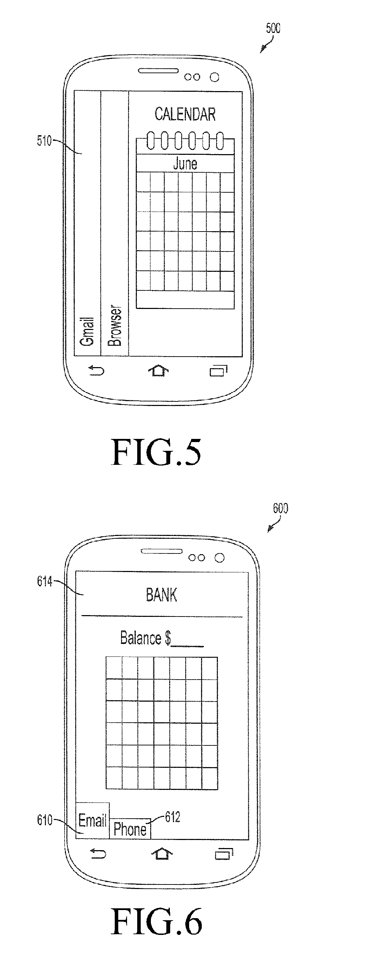

FIG. 5 illustrates an application display, according to another embodiment of the present disclosure.

An embodiment is configured to display in the manner of a thin film or foil rolling back, but the present invention is not limited thereto. For example, embodiments may be configured to have the forefront application screen shrink or distort in the pulled direction to uncover another application screen.

Referring now to FIG. 5, if the application screen is shrunk to a narrow vertical band 510 on the left or right side of a display of mobile device 500, for example, an effect may be achieved similar to a door being opened or a page being turned as the application screen is peeled from the forefront. Further, the change in size and shape may be varied to achieve different desirable effects to enhance the user's experience; for an example, embodiments can be configured to have the vertical band 510 resemble a curtain that has been drawn aside. Other variations are of course possible.

FIG. 6 illustrates an application display, according to another embodiment of the present disclosure.

Referring now to FIG. 6, embodiments may be configured to have the forefront application screen slide in the pulled direction in the manner of a tile displayed on a display of mobile device 600. In this embodiment, the tiled screens of the applications would maintain a size and shape, but would have some portion of the application shifted "off screen". Each application slid aside in this manner may maintain its order relative to the other applications. For example, if a first application 610 is slid to the bottom left, the bottom left of the screen would display the right top corner of the screen of the first application 610. If the next application 612 is similarly slid towards the bottom left, it would slide between the first application 610 and a third application 614. The bottom left corner of the screen would be the top right corner of the screen of the first application 610, protruding from the screen of the first application 610 would be the right top corner of the screen of the second application 612, and the remainder of the screen would be the screen of the third application 614. If the applications are slid to along an edge such as the top or side, embodiments may be configured such that the screen of the third application 614 is entirely displayed in the remaining rectangular area. Alternatively, and in all cases, embodiments may be configured such that the screen of the third application 614 is partially overlapped by the screens of the first and second applications 610 and 612. In each case, the user may then return to any peeled application by selecting the remaining visible portion of the earlier application screen and pulling it back to the desktop.

Other variations are of course possible without departing from the scope and spirit of the disclosed invention, so long as the peeled screen of the application reveals a concurrently running application on the screen underneath, and may be unpeeled with a returning motion.

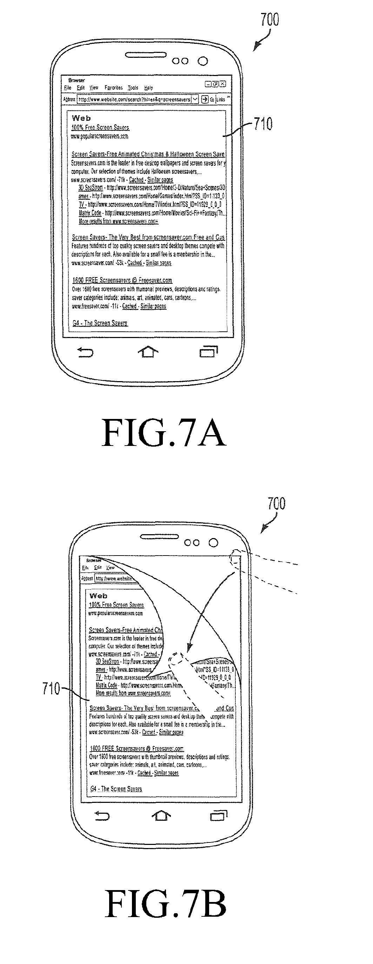

FIGS. 7A-7C illustrate application displays, according to another embodiment of the present disclosure.

Referring to FIG. 7A, a mobile device 700 is shown running an application 710, for example, a web browser.

In FIG. 7B, the user begins to peel the screen of application as described above. In this example, it does not matter whether there are other concurrently running applications.

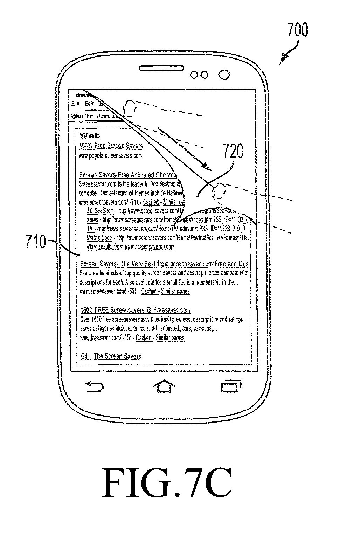

In FIG. 7C, the user runs a finger along the peel edge 720 by touch and dragging. This motion is intuitively comparable to folding or creasing the corner of a paper page, for example. In an embodiment of the present disclosure, a motion like creasing the peeled corner may bring about a predetermined function. The predetermined function may be defined within an application, or may be defined within the OS for the application, or may be defined according to a user's selection. For example, in a web browser application 710, creasing the corner along edge 720 may save the present web page in a bookmarks list. If the creased corner is not defined for an application, the OS may have a default function, for example, creating a link for the present application on the home desktop.

In an embodiment of the present disclosure, different creases may be predefined to bring about different functions. For example, if the upper right corner of web browser 710 is creased along peeled edge 720, the current page may be saved as a bookmark. If the lower right corner is peeled and creased, a different function may be defined, such as posting a link to the current page to the user's account on a social media site. The different functions of the various creased locations may be predefined within each application, or may be determined according to a user's selection.

In an embodiment of the present disclosure, a predetermined location in an application screen may be defined to bring about a predetermined common function. For example, peeling from a predetermined location in each application screen, for example, a top left corner, may be configured to bring up a help screen for a current application that has a help screen. The user may thus have a standard peel corner to remember to access the help screen for multiple applications. Similar to the crease function described above, each creased location not defined within an application may have a separately determined function within the OS.

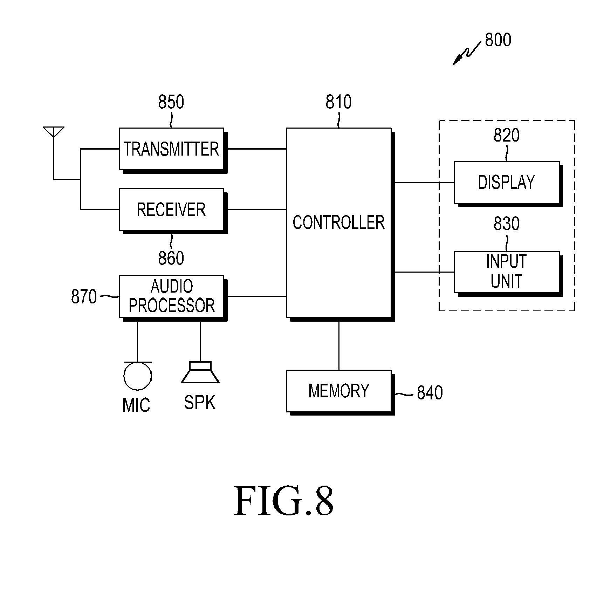

FIG. 8 is a block diagram of a mobile device for displaying applications, according to an embodiment of the present disclosure.

Referring to FIG. 8, a mobile device 800 according to an exemplary embodiment of the present disclosure includes at least one controller 810, a display 820 for displaying the screen of an active application, and an input unit 830 for receiving inputs from a user. In some embodiments, the display 820 and the input unit 830 may be combined as a touchscreen, although the present invention is not limited thereto.

The mobile device 800 may include a memory 840 for storing programs and data. The programs may include an OS and applications. The memory 840 may include any form of memory that the controller 810 can read from or write to.

The mobile device 800 may include a transmitter 850 and a receiver 860 for wireless communication, such as a telephone function or a wireless Internet function. The mobile device 800 may also include an audio processor 870, a microphone MIC, and a speaker SPK, for audio communication.

The mobile device 800 may include a function, either readable as a program from the memory 840 or embodied as hardware in the controller 810, to allow a user to select a location using the input unit 830 of a first application screen displayed on display 820, and to drag the selected location to a different position, thereby revealing a screen of a second application. The second application screen will be revealed in an original position of the selected location in the first application screen. The revealed second application will be in a current running state and can be interacted with directly until the dragged location in the first application screen is returned to its original position.

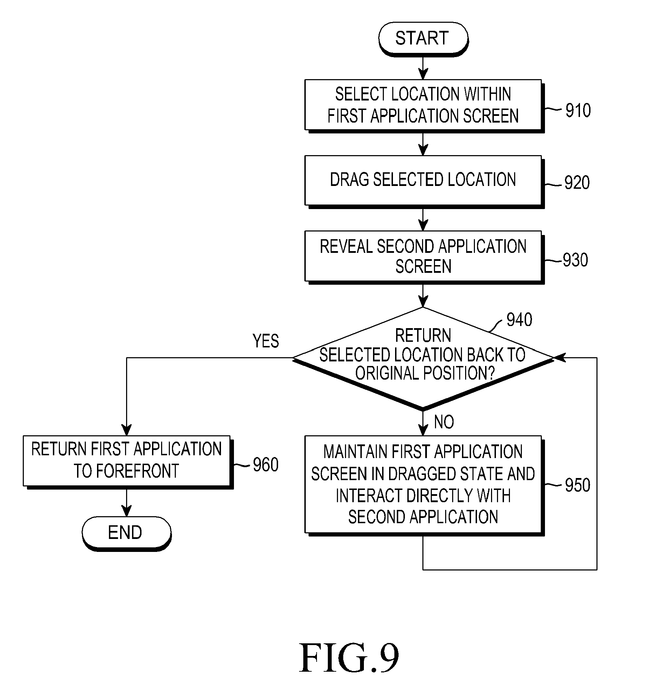

FIG. 9 is flowchart illustrating application display operations according to an embodiment of the present disclosure. The application display operations may be performed by the mobile device 800 as shown in FIG. 8. The flowchart is shown in relation to FIGS. 3A to 3C illustrating a general example of aforementioned embodiments of the present disclosure. The ordinary skilled in the art may readily practice from following descriptions in connection with FIG. 9 the remaining embodiments of the present disclosure with respect to FIGS. 4A through 7C.

Referring to FIG. 9, in step 910 a predetermined location is selected within a screen of a first application. In step 920 the selected location is dragged, and in step 930, a screen of a second application will be revealed. For example, a corner of the first application screen may be selected by touching a corner of a touchscreen interface. The selected location is a location that is not defined within the first application for the touch event.

For example, in an embodiment, the dragged location may result in the corner of the first application screen being peeled in the manner of a film or foil.

The second application is an application that is concurrently running or recently selected. The second application screen may be revealed in a full screen state of current operation. The second application screen may be visible in the position where the location in the first application screen was selected and dragged. For example, if the corner of the first application screen is dragged towards the center of the screen, the second application may be uncovered and revealed in whatever area from which the first application screen has been dragged off. The user may interact normally with the revealed second application. In an exemplary embodiment, the first application screen may remain in the peeled state even if the dragged first application screen is released. Alternatively, in another embodiment, the first application screen will return to a full screen state if the dragged first application screen is released.

In step 940 it is determined whether the selected location in the first application screen is returned back to its original position. An embodiment may be configured to return the selected location to the original position if there is a touch-up (release) event. Alternatively, in another embodiment, the selected location may return to the original position only if dragged back to the original position by a user input such as a touch-and-drag event.

If it is determined that the selected location is not returned to its original position, the controller 810 may remain the first application screen in the dragged state, for example, remain the selected location in a position to which it was dragged, in step 950. Additionally, in step 950, the controller 810 may control the revealed second application to be interacted with directly while the first location screen is maintained in the dragged or peeled state.

If the selected location is determined to be returned to the original position, the controller 810 may return the first application screen to the forefront in a full screen state in step 960.

According to embodiments of the present disclosure, multiple applications running concurrently may be managed in a more improved way. In particular, multiple applications running concurrently may be intuitively identified and selected. Furthermore, a predetermined function for multiple applications may be intuitively performed.

Certain aspects of the present disclosure may also be embodied as computer readable code on a computer readable recording medium. A computer readable recording medium is any data storage device that can store data, which can be thereafter read by a computer system. Examples of the computer readable recording medium include Read-Only Memory (ROM), Random-Access Memory (RAM), Compact Disc (CD)-ROMs, magnetic tapes, floppy disks, and optical data storage devices. The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the disclosure has been shown and described with reference to certain exemplary embodiments thereof, it will be understood by those skilled in the art that various changes in form and details may be made therein without departing from the spirit and scope of the invention as defined by the appended claims and their equivalents. For example, while embodiments of the present disclosure were described with respect to a mobile device as an example of an electronic device, the embodiments may also be applied similarly to different types of electronic devices other than the mobile device.

## Claims

1. A method for displaying multiple applications running concurrently in an electronic device, the method comprising:
displaying at least a part of a screen of an active second application not having thus far been displayed, in an area in which a screen of an active first application has been displayed by replacing the screen of the first application with the screen of the second application to an extent that the screen of the first application is dragged, when a predetermined location within the screen of the first application is selected and dragged.

2. The method of claim 1, wherein the predetermined location comprises a location for which a select and drag event is not defined within the first application.

3. The method of claim 1 or 2, wherein the dragging of the predetermined location is displayed as one of peeling, sliding a tile, and shrinking the screen of the first application, according to the dragging.

4. The method of any of claims 1 to 3, wherein the screen of the first application remains in a dragged state when the dragging of the screen of the first application is released.

5. The method of any of claims 1 to 3, wherein the first application is in a forefront state until the screen of the first application is dragged, and
wherein the first application is automatically returned to the forefront when the dragging of the screen of the first application is released or the dragged location is returned back to an original position thereof.

6. The method of any of claims 1 to 5, further comprising: allowing the second application to be interacted with a user while the screen of the second application is displayed.

7. The method of claim 1, wherein dragging the screen of the first application is displayed as if the screen of the first application is peeled from the predetermined location when dragged,
further comprising performing a predetermined function according to the predetermined location.

8. The method of claim 1, wherein dragging the screen of the first application is displayed as if the screen of the first application is peeled from the predetermined location while being dragged,
further comprising performing a predetermined function when a touch-and-drag event occurs along a peeled edge of the screen of the first application.

9. An electronic device comprising:
a display configured to display a screen of at least one active application;
an input unit configured to receive an input from a user; and
a controller configured to display at least a part of a screen of an active second application not having thus far been displayed, in an area in which a screen of an active first application has been displayed by replacing the screen of the first application with the screen of the second application to an extent that the screen of the first application is dragged, when a predetermined location within the screen of the first application being displayed on the display is selected and dragged through the input unit.

10. The electronic device of claim 9, wherein the predetermined location comprises a location for which a select and drag event is not defined within the first application.

11. The electronic device of claim 9 or 10, wherein the controller displays the screen of the first application as one of peeling, sliding a tile, and shrinking the screen of the first application, according to the dragging.

12. The electronic device of any of claims 9 to 11, wherein the first application is in a forefront state until the screen of the first application is dragged, and
wherein the controller automatically returns the first application to the forefront when the dragging of the screen of the first application is released or the dragged location is returned back to an original position thereof.

13. The electronic device of any of claims 9 to 12, wherein the controller controls the second application to be interacted with a user while the screen of the second application is displayed.

14. The electronic device of claim 9, wherein the controller displays the screen of the first application as if the screen of the first application is peeled from the predetermined location while being dragged, and performs a predetermined function according to the predetermined location.

15. The electronic device of claim 9, wherein the controller displays the screen of the first application as if the screen of the first application is peeled from the predetermined location while being dragged, and performs a predetermined function when a touch-and-drag event occurs along a peeled edge of the screen of the first application.
